(19) Europäisches Patentamt
European Patent Office
Office européen des brevets

(11) **EP 2 712 782 B1**

(12) **EUROPEAN PATENT SPECIFICATION**

(45) Date of publication and mention
of the grant of the patent:
**31.01.2018 Bulletin 2018/05**

(51) Int Cl.:
**B60W 30/18** *(2012.01)*

(21) Application number: **12186654.5**

(22) Date of filing: **28.09.2012**

(54) **Method and apparatus for performing driving assistance**

Verfahren und Vorrichtung zur Fahrhilfedurchführung

Procédé et appareil permettant de mettre en oeuvre une aide à la conduite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.04.2014 Bulletin 2014/14**

(73) Proprietor: **Hitachi, Ltd.
Tokyo 100-8280 (JP)**

(72) Inventors:
• **Takahashi, Junya
81925 Munich (DE)**
• **Yamakado, Makoto
Hitachinaka-city, Ibaraki (JP)**
• **Yokoyama, Atsushi
Hitachinaka-city, Ibaraki (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 1 355 209      EP-A1- 2 468 599
DE-A1-102009 037 856   DE-A1-102010 053 747**

**EP 2 712 782 B1**

**Description**

The present invention relates to a method and an apparatus for performing driving assistance for a vehicle.

**Background**

In the prior art of performing driving assistance for a vehicle, there are known the concepts of so-called Electronic Stability Control (ESC), also referred to as Electronic Stability Program (ESP) or Dynamic Stability Control (DSC), which is a computer-implemented control technology for improving the safety of a vehicle's stability by detecting and reducing loss of traction, wherein the control target is the yaw moment of the vehicle.

Recently, according to EP 1 992 537 A2, another concept for performing driving assistance for a vehicle was proposed, which concept (referred to as e.g. G-Vectoring Control, GVC) can be provided alternatively or also additionally to the above-mentioned Electronic Stability Control (ESC), in which the control target is the longitudinal acceleration of the vehicle and the control is based on a lateral acceleration and lateral jerk of the vehicle.

Specifically, according to a control concept, a lateral acceleration of the vehicle, which is an acceleration of the vehicle in a lateral direction perpendicular to a longitudinal direction of the vehicle corresponding to a moving direction of the vehicle, and a lateral jerk of the vehicle, which is a jerk of the vehicle in the lateral direction, are determined. Based on the determined lateral acceleration and lateral jerk, a longitudinal acceleration of the vehicle is controlled.

While the principle concept of control of longitudinal acceleration of the vehicle and the control has been developed, it is desirable to modify and develop further the control concept of EP 1992 537 A2 for providing improved safety and higher driver's comfort and convenience, and in particular for providing improved vehicle handling and cornering behavior.

Relating to background of the invention, EP 1355 209 A1 shows a vehicle control system which comprises a plurality of subsystem controllers including an engine management system, a transmission controller, a steering controller, a brakes controller and a suspension controller. These subsystem controllers are each operable in a plurality of subsystem modes, and are all connected to a vehicle mode controller which controls the modes of operation of each of the subsystem controllers so as to provide a number of driving modes for the vehicle. Each of the modes corresponds to a particular driving style, like normal, sport or economy and to a particular on-road or off-road driving surface or terrain, like ice, grass or mud, and in each mode each of the functions is set to the function mode most appropriate to those conditions.

**Summary of the invention**

In view of the above object, there is proposed a method for performing driving assistance for a vehicle according to claim 1 and an apparatus for performing driving assistance for a vehicle according to claim 14 according to the present invention. Further, a computer program product according to claim 15 is proposed. Dependent claims relate to some of the preferred embodiments of the present invention.

There may be provided a method or apparatus for performing driving assistance for a vehicle in which a lateral acceleration and a lateral jerk of the moving vehicle or at least parameters indicative of the lateral acceleration and the lateral jerk of the moving vehicle are determined, in particular regularly determined or even continuously monitored, and a longitudinal acceleration of the moving vehicle may then be controlled on the basis of the determined lateral acceleration and lateral jerk, see EP-A-1 355 209. According to a first aspect, a method for performing driving assistance for a vehicle comprises determining a lateral acceleration of the vehicle, which is an acceleration of the vehicle in a lateral direction perpendicular to a longitudinal direction of the vehicle corresponding to a moving direction of the vehicle, and determining a lateral jerk of the vehicle, which is a jerk of the vehicle in the lateral direction, and controlling a longitudinal acceleration of the vehicle on the basis of the determined lateral acceleration and lateral jerk.

The method according to the invention in accordance with claim 1 is distinguished from the methods known from the prior art at least in that controlling the longitudinal acceleration of the vehicle is based on suspension characteristics of the vehicle, in particular at least on the basis of damper-force settings of one or more dampers of the vehicle.

Here, the underlying idea of the present invention is that the control of the longitudinal acceleration based on lateral acceleration and jerk as known from the prior art can be significantly improved with regard to safety and driver's comfort if the control is adapted/adjusted to the particular suspension characteristics of the vehicle such as e.g. the damping behavior or damping force of a suspension mechanism of the vehicle.

Especially, the inventors have found that the suspension characteristics such as the damper-force settings may strongly affect pitch and roll behavior of the vehicle during cornering so that lateral acceleration and jerk may be depending on the suspension characteristics, and also the driver's feeling during cornering is depending on the suspension characteristics. Accordingly, the inventors propose to adapt the control of the longitudinal acceleration based on lateral acceleration and jerk such as to depend on suspension characteristics of the vehicle, in particular on damper-force settings of one or more dampers of the vehicle.

In the above, the term acceleration refers to a derivative of speed (or velocity) with respect to time and the term jerk refers to a derivative of acceleration with respect to time, or to a second derivative of speed (or velocity) with respect to time. A lateral direction of the vehicle can also be referred to as a direction of the pitch axis of the vehicle and a longitudinal direction of the vehicle can be referred to as a direction of the roll axis of the vehicle.

Moreover, while velocity, acceleration and jerk are in general vector quantities, terms such as lateral acceleration, longitudinal acceleration, and lateral jerk are typically referring to scalar quantities.

In a Cartesian coordinate system of the vehicle having the yaw, pitch and roll axes as principal axes of the coordinate system, a lateral acceleration refers to the pitch axis coordinate of the acceleration vector and a longitudinal acceleration refers to the roll axis coordinate of the acceleration vector. Similarly, a lateral jerk refers to the pitch axis coordinate of the jerk vector.

In the driving control, while the longitudinal acceleration may preferably need to discriminate between positive acceleration (acceleration of the vehicle in the sense of increasing speed) and negative acceleration (deceleration) of the vehicle in the sense of decreasing speed/braking, the lateral acceleration does not necessarily need to discriminate between positive lateral acceleration (i.e. acceleration towards the left/right) and negative lateral acceleration (i.e. acceleration towards the right/left) since driving control should preferably be performed similar for left turn and right turn driving.

Therefore, a lateral acceleration may similarly refer to the absolute value of the pitch axis coordinate of the acceleration vector, however, then, a lateral jerk may preferably refer to the derivative of the absolute value of the lateral acceleration with respect to time. On the other hand, a lateral jerk preferably again may preferably need to discriminate between positive jerk (i.e. increasing lateral acceleration) and negative jerk (i.e. decreasing lateral acceleration).

In a preferred aspect, the vehicle may operate in one of plural available or selectable suspension modes (such as e.g. suspension modes having different suspension characteristics such as e.g. different damping force settings), and the method may further comprise determining a suspension mode of the vehicle, which is configured to operate in one of a plurality of suspension modes, wherein controlling the longitudinal acceleration of the vehicle is then preferably further based on the determined suspension mode of the vehicle, in particular dependent on the determined suspension mode of the vehicle such that the control of the longitudinal acceleration of the vehicle is adjusted according to an activated suspension mode of the vehicle.

According to this preferred aspect, the control of the longitudinal acceleration of the vehicle can be advantageously adjusted to specific suspension modes of the vehicle such as suspension modes referred to as "soft" or "comfort" (e.g. weak damping force), "normal" (e.g. intermediate damping force) and/or "hard" or "sport" (e.g. strong damping force). Accordingly, the control can be advantageously optimized with respect to safety and driver's comfort depending on the specific activated (operated) suspension mode of the plural available suspension modes.

This preferred aspect may be especially advantageous for vehicles which can be switched, in particular dynamically switched, between two or more different suspension modes (e.g. on the basis of a driver's input at an input unit of a control console of the vehicle, potentially even during driving). Then, the control characteristics of the control of the longitudinal acceleration can be adapted with respect to the selected/activated/operated suspension mode among the plural different suspension modes.

According to a preferred aspect, controlling the longitudinal acceleration of the vehicle is preferably based on a longitudinal acceleration target value being calculated on the basis of the determined lateral acceleration, the lateral jerk of the vehicle and one or more parameters being varied based on the suspension characteristics of the vehicle and in particular based on the determined suspension mode of the vehicle.

In other words, the longitudinal acceleration target value may be calculated according to a function of the determined lateral acceleration, the lateral jerk of the vehicle and one or more parameters being dependent on the suspension characteristics of the vehicle and in particular on the determined suspension mode of the vehicle. Such longitudinal acceleration target value may be calculated by a vehicle control unit and be output as a control target value for controlling longitudinal acceleration of the vehicle according to the calculated control target value.

Preferably, the parameter that is dependent on the suspension characteristics or suspension modes or varied according to the suspension characteristics or suspension modes is based on or corresponds to at least one of a gain factor and a time factor, wherein the longitudinal acceleration target value increases with increasing gain factor and the longitudinal acceleration target value increases with decreasing time factor.

In the above, according to preferred aspects, the gain factor is preferably varied based on the suspension characteristics or the determined suspension mode of the vehicle. In other words, the gain factor may be varied according to a function of the suspension characteristics, such as e.g. the damping force, or it may be varied based on the determined suspension mode of the vehicle. For example, the value of the gain factor used in the calculation of the control target value may be different for different suspension modes.

This allows to advantageously and conveniently adjust a magnitude of the control target value based on suspension characteristics or even suspension modes. The method may then further comprise determining the gain factor on the basis of the suspension characteristics or on the basis of the determined suspension mode of the vehicle.

In a particularly preferred aspect, the suspension modes of the vehicle comprise at least a soft suspension mode and a hard suspension mode, wherein a first gain factor used for soft suspension mode is preferably smaller than a second gain factor used for hard suspension mode. Further, the suspension modes of the vehicle may further comprise a normal suspension mode (intermediate suspension mode), wherein a third gain factor used for normal suspension mode is preferably smaller than or equal to the second gain factor and larger than or equal to the first gain factor.

It is to be noted that a damping force may be different for the different suspension modes or at least the suspension characteristics of the suspension damper may be different for different suspension modes, and in particular a damping force for the soft suspension mode may be smaller than a damping force for the normal (intermediate) suspension mode and a damping force for the normal (intermediate) suspension mode may be smaller than a damping force for the hard suspension mode.

In other words, the soft suspension mode may have smaller damping force characteristics compared to the hard suspension mode, and the normal (intermediate) suspension mode may have smaller damping force characteristics compared to the hard suspension mode and larger damping force characteristics compared to the soft suspension mode.

Alternatively or in addition to a variation of the gain factor, according to further preferred aspects, the time factor may be varied based on the determined suspension mode of the vehicle. In other words, the time factor may be varied according to a function of the suspension characteristics, such as e.g. the damping force, or it may be varied based on the determined suspension mode of the vehicle, e.g. the value of the time factor used in the calculation of the control target value may be different for different suspension modes.

This allows to advantageously and conveniently adjust a time response of the control target value calculation based on suspension characteristics or even suspension modes. The method may then further comprise determining the time factor on the basis of the suspension characteristics or on the basis of the determined suspension mode of the vehicle.

In the above preferred aspects, the suspension modes of the vehicle preferably comprise at least a soft suspension mode and a hard suspension mode, wherein a first time factor used for soft suspension mode is preferably larger than a second time factor used for hard suspension mode.

Further preferably, the suspension modes of the vehicle further comprises a normal suspension mode, wherein a third time factor used for normal suspension mode is preferably larger than or equal to the second time factor and smaller than or equal to the first time factor.

According to another preferred aspect, controlling the longitudinal acceleration of the vehicle based on the determined suspension mode of the vehicle is performed on the basis of a target average slope of a pitch rate of the vehicle over a roll rate of the vehicle when cornering a target corner at a target initial speed.

During cornering of the vehicle in a curve, roll rate in units of angular per time (e.g. degree/s) and pitch rate in units of angular per time (e.g. degree/s) can be monitored (e.g. by a gyro sensor) and the pitch rate over the roll rate can be plotted in a so-called pitch rate - roll rate diagram. In such diagram, for higher pitch and roll rates, the curve in the diagram can be approximated by a linear slope at least for regions in which both of the pitch and roll rates increase, and, thus, an average slope of the of a pitch rate of the vehicle over a roll rate of the vehicle can be determined.

In case the suspension characteristics of the vehicle such as different suspension modes are not considered for the control of the longitudinal acceleration based on lateral acceleration and jerk, inventors have found that the average slope of a pitch rate of the vehicle over a roll rate will be different for different suspension characteristics or different suspension modes. For example, when using the same control parameters and characteristics, average slope of a pitch rate of the vehicle over a roll rate for soft suspension mode (or weaker damping forces) will be steeper than average slope of a pitch rate of the vehicle over a roll rate for hard suspension mode (or stronger damping forces).

Then, preferably, control parameters and in particular gain and/or time factors used for different suspension characteristics or suspension modes can be adjusted such that the average slope of a pitch rate of the vehicle over a roll rate during cornering of the vehicle in a curve approximately follows a similar target average slope independent of suspension characteristics or suspension modes.

Preferably, even for significantly improved driving and control characteristics with optimized driver's feeling, target average slope of a pitch rate of the vehicle over a roll rate during cornering of the vehicle in a curve is preferably smaller or equal to 0.4, even more preferably smaller or equal to 0.35. In addition, the target average slope of a pitch rate of the vehicle over a roll rate during cornering of the vehicle in a curve is preferably larger or equal to 0.15.

Preferably, controlling the longitudinal acceleration of the vehicle based on the suspension characteristics or the determined suspension mode of the vehicle is performed such that the average slope of the pitch rate of the vehicle over the roll rate of the vehicle when cornering the target corner at the target initial speed corresponds to the target average slope independent of the suspension characteristics or the suspension mode of the vehicle.

According to a second aspect, there is proposed an apparatus, such as e.g. a vehicle control unit or a system comprising a vehicle control unit and one or more acceleration sensitive sensor means, for performing driving assistance for a vehicle according to a method any of the above described aspects, comprising lateral acceleration determining means for determining a lateral acceleration of the vehicle, which is an acceleration of the vehicle in a lateral direction perpendicular to a longitudinal direction of the vehicle corresponding to a moving direction of the vehicle, lateral jerk determining means for determining a lateral jerk of the vehicle, which is a jerk of the vehicle in the lateral direction, and longitudinal acceleration control means for controlling a longitudinal acceleration of the vehicle on the basis of the determined lateral acceleration and lateral jerk and on the basis of suspension characteristics of the vehicle.

According to a preferred aspect, the apparatus may comprise suspension mode determining means for determining a suspension mode of the vehicle being configured to operate in one of a plurality of suspension modes, wherein the longitudinal acceleration control means is preferably configured to control the longitudinal acceleration of the vehicle based on the determined suspension mode of the vehicle.

According to a third aspect, there is proposed a computer program product comprising computer program means for causing a vehicle control apparatus to execute the steps of a method any of the above described aspects.

Summarizing, according to the present invention, by additionally taking into account the suspension characteristics and/or suspension modes of the vehicle in the control of the longitudinal acceleration and adjusting the control depending on suspension characteristics, it can be achieved to modify and develop further the control concept of EP 1 992 537 A2 for providing improved safety and higher driver's comfort and convenience, and in particular for providing improved vehicle handling and cornering behavior.

## Brief description of figures

Fig. 1 exemplarily illustrates a control of longitudinal acceleration based on lateral acceleration and jerk.

Fig. 2 exemplarily illustrates a relation between lateral acceleration, lateral jerk and longitudinal acceleration based on lateral acceleration and jerk as a function of time.

Fig. 3 exemplarily shows a g-g-diagram for the lateral and longitudinal accelerations during cornering of the vehicle under control of longitudinal acceleration based on lateral acceleration and jerk.

Fig. 4 exemplarily shows a relation between vehicle speed, steering wheel angle, lateral acceleration, longitudinal acceleration for soft and hard

suspension modes.

Fig. 5 exemplarily shows a g-g-diagram for the lateral and longitudinal accelerations of Fig. 4.

Fig. 6 exemplarily shows a relation between roll rate and pitch rate as function of time for soft and hard suspension modes.

Fig. 7 exemplarily shows a pitch rate - roll rate diagram for pitch and roll rates of Fig. 6.

Fig. 8 exemplarily shows a schematic view of a vehicle equipped with a control system according to an embodiment of the present invention.

Fig. 9 exemplarily illustrates a control of longitudinal acceleration based on lateral acceleration and jerk according to an embodiment of the present invention.

Fig. 10 exemplarily illustrates a control of longitudinal acceleration based on lateral acceleration and jerk according to an embodiment of the present invention.

Fig. 11 exemplarily illustrates a control method according to an embodiment of the present invention.

Fig. 12 exemplarily illustrates a method for adjusting control parameters according to an embodiment of the present invention.

Fig. 13 exemplarily illustrates three alternative control parameter combination relations.

Fig. 14 exemplarily shows a relation between roll rate and pitch rate as function of time for soft and hard suspension modes under control according to an embodiment of the present invention.

## Detailed description of figures and preferred embodiments of the present invention

Preferred embodiments of the present invention will be described below with reference to the accompanying figures. The described features and aspects of the embodiments may be modified or combined to form further embodiments of the present invention.

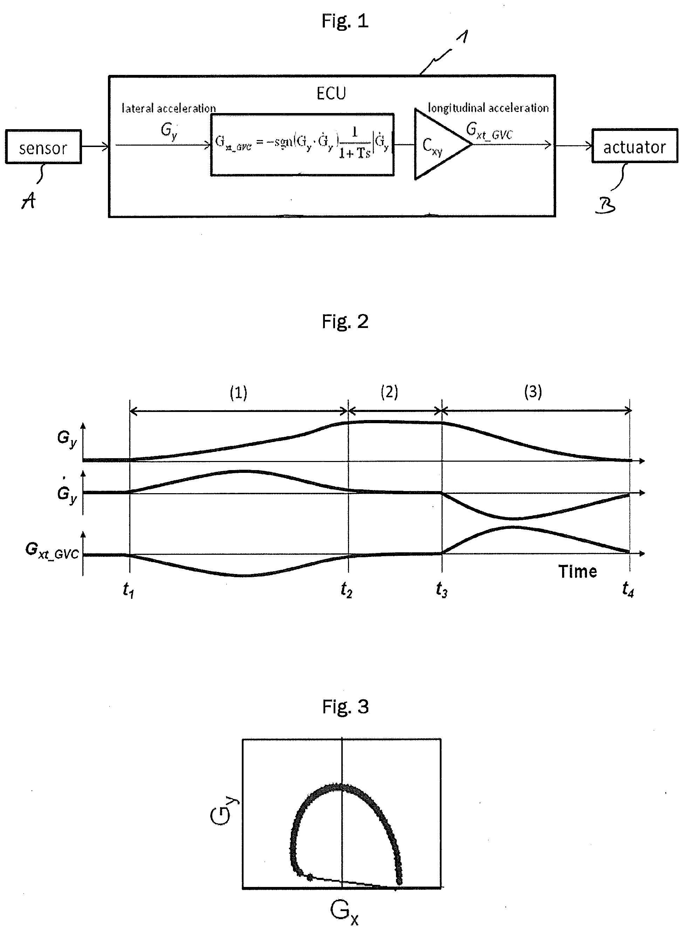

Fig. 1 exemplarily illustrates a control of longitudinal acceleration $G_X$ based on lateral acceleration $G_Y$ and jerk $\dot{G}_Y$.

Based on sensor input by a sensor A or sensor system, which is configured to directly input a regularly or periodically determined or even continuously monitored lateral acceleration $G_Y$ in the pitch axis direction of a vehicle to a control unit 1 or indirectly provide sensor information on the basis of which the lateral acceleration $G_Y$ can be estimated, a longitudinal acceleration control target value $G_{xt\_GVC}$ is determined, and output to one or more actuators B for vehicle acceleration/deceleration according to the longitudinal acceleration control target value $G_{xt\_GVC}$ output from the control unit 1.

The sensor A or sensor system may comprise acceleration sensitive sensors such as e.g. motion sensors, accelerometers and/or yaw-rate, pitch-rate and/or roll-rate sensitive gyro-sensors. In addition, or alternative, the sensor A may comprise a steering wheel (or driving wheel) angular sensor sensitive to a steering wheel angle (or driving wheel angle) and a lateral acceleration may be calculated on the basis of vehicle speed and the determined steering wheel angle (or driving wheel angle), and/or it may be estimated on the basis of pitch, roll and/or yaw rates determined by a gyro-sensor.

Based on the input lateral acceleration $G_Y$, a derivative of the lateral acceleration $G_Y$ with respect to time is derived or calculated, referred to as lateral jerk $\dot{G}_Y$, and based on the lateral acceleration $G_Y$ and the lateral jerk $\dot{G}_Y$, the longitudinal acceleration target control value $G_{xt\_GVC}$ is calculated according to the following equation (1):

$$G_{xt\_GVC} = -sgn\left(G_y \cdot \dot{G}_y\right) \frac{C_{xy}}{1+Ts} \left| \dot{G}_y \right| \qquad (1)$$

Here, $C_{xy}$ and T are auxiliary control parameters that can be pre-defined and stored in a memory unit of the control unit 1. $C_{xy}$ is referred to as a "gain factor" (a dimensionless parameter), and the longitudinal acceleration target control value $G_{xt\_GVC}$ is directly proportional to the gain factor $C_{xy}$ and the absolute value of the lateral jerk $\dot{G}_Y$. The longitudinal acceleration target control value $G_{xt\_GVC}$ increases with increased gain factor $C_{xy}$ and decreases with decreased gain factor $C_{xy}$. Another control parameter may be included such as T which is referred to as a "time constant" or "time factor" (a dimensionless parameter). Here, the increase of the longitudinal acceleration target control value $G_{xt\_GVC}$ in a given period of time becomes larger with decreased time factor T and smaller with increased time factor T.

According to equation (1) above, the sign of the longitudinal acceleration target control value $G_{xt\_GVC}$ is opposite to the sign of the product of the lateral acceleration $G_Y$ and the lateral jerk $\dot{G}_Y$.

Here, the lateral acceleration $G_Y$ may discriminate between left and right lateral direction by being negative for left (or right) sided lateral acceleration and correspondingly being positive for right (or left) sided lateral acceleration. On the other hand, lateral acceleration $G_Y$ may also only refer to an absolute value of lateral acceleration, however, then the lateral jerk $\dot{G}_Y$ needs to refer to the derivative of the absolute value of lateral acceleration with respect to time.

Fig. 2 exemplarily illustrates a relation between lateral acceleration $G_Y$, lateral jerk $\dot{G}_Y$ and longitudinal acceleration $G_X$ controlled based on lateral acceleration $G_Y$ and jerk $\dot{G}_Y$ as a function of time, when the longitudinal acceleration $G_X$ is controlled according to the longitudinal acceleration target control value $G_{xt\_GVC}$ as described above.

When a vehicle is entering a curve for cornering and the driver moves the steering wheel so that the vehicle turns about the yaw axis, lateral acceleration $G_Y$ (which is zero on a straight road independent of whether the vehicle is accelerating, decelerating or moving at a constant speed) will start to increase from zero, see period between times $t_1$ and $t_2$ in Fig. 2.

In an intermediate period between times $t_2$ and $t_3$ in Fig. 2, lateral acceleration will $G_Y$ reach a value for steady-state cornering and may stay approximately constant until it decreases again down to zero in a last cornering period between times $t_3$ and $t_4$ in Fig. 2 when leaving the curve at the curve exit.

Here, depending on the topology of the curve, the time period between times $t_2$ and $t_3$ may be very short or not even exist. In the later case, the lateral acceleration $G_Y$ may increase from zero to a maximum value during this cornering and thereafter directly decrease again down to zero when leaving the curve.

As shown in Fig. 2, the lateral jerk $\dot{G}_Y$ will increase to a maximum value and decrease again down to zero between times $t_1$ and $t_2$. In the intermediate time period between times $t_2$ and $t_3$, where the lateral acceleration $G_Y$ does not vary significantly, the lateral jerk $\dot{G}_Y$ remains zero, and in the last time period between times $t_3$ and $t_4$, lateral jerk $\dot{G}_Y$ will decrease from zero to a minimum value and increase again up to zero.

The longitudinal acceleration target control value $G_{xt\_GVC}$ as described above will behave similarly to the absolute value of the lateral jerk $\dot{G}_Y$ because being directly proportional to the absolute value of the lateral jerk $\dot{G}_Y$ but the sign is the opposite sign of the product of lateral acceleration and jerk.

Consequently, directly after entering the curve and beginning the cornering in the first period between times $t_1$ and $t_2$, the longitudinal acceleration target control value $G_{xt\_GVC}$ will decrease down from zero to a minimum value in this cornering scenario and increase again to zero. In this period, the longitudinal acceleration target control value $G_{xt\_GVC}$ is negative and thus corresponds to a negative acceleration or deceleration (braking) of the vehicle in the first phase of cornering. Accordingly, during the whole period between times $t_1$ and $t_2$, vehicle speed will be decreased (deceleration or braking control).

In the intermediate period between times $t_2$ and $t_3$, the longitudinal acceleration target control value $G_{xt\_GVC}$ will remain approximately zero as long as the lateral jerk $\dot{G}_Y$ remains approximately zero, i.e. the vehicle will move by an approximately constant speed through the curve during the cornering during the period between times $t_2$ and $t_3$.

Finally, in the last stage of cornering before leaving the curve, during the period between times $t_3$ and $t_4$, the longitudinal acceleration target control value $G_{xt\_GVC}$ will increase up from zero to a maximum value in this cornering scenario and decrease again to zero. In this period, the longitudinal acceleration target control value $G_{xt\_GVC}$ is positive and thus corresponds to a positive acceleration of the vehicle in the final phase of cornering. Accordingly, during the whole period between times $t_3$ and $t_4$, vehicle speed will be increased (acceleration control).

Fig. 3 exemplarily shows a g-g-diagram for the lateral and longitudinal accelerations $G_Y$ and $G_X$ during cornering of the vehicle under control of longitudinal acceleration $G_X$ based on lateral acceleration $G_Y$ and jerk $\dot{G}_Y$ according to the longitudinal acceleration target control value $G_{xt\_GVC}$. Here, the horizontal axis denotes the longitudinal acceleration $G_X$ (negative values on the left and positive values on the right), and the vertical axis denotes positive values of the lateral acceleration $G_Y$.

According to the relations as explained with reference to Fig. 2, the g-g-diagram of Fig. 3 will be run through in a clockwise direction starting at the origin where $G_X = G_Y = 0$ before entering the curve prior to cornering. As soon as the vehicle starts cornering, the lateral acceleration $G_Y$ will increase, resulting in a negative longitudinal acceleration $G_X$ until the lateral acceleration $G_Y$ reaches a maximum value during this cornering scenario, resulting in the longitudinal acceleration $G_X$ being zero, whereafter the lateral acceleration $G_Y$ will decrease again down to zero in the final stage of cornering, resulting in a positive longitudinal acceleration $G_X$ until the lateral acceleration $G_Y$ reaches zero again at the exit of the curve.

Summarizing the above, in the control of the longitudinal acceleration $G_X$ of the vehicle according to the longitudinal acceleration target control value $G_{xt\_GVC}$, when the vehicle starts entering a corner, the vehicle will automatically brake (or decelerate) simultaneously as the lateral jerk $\dot{G}_Y$ increases (see the period between times $t_1$ and $t_2$ in Fig. 2, left side of Fig. 3), and thereafter the vehicle may remain in a steady-state cornering in which no longitudinal acceleration or deceleration is performed (i.e. the vehicle stops braking without accelerating again) in the period between times $t_2$ and $t_3$ in Fig. 2 because the lateral jerk $\dot{G}_Y$ becomes zero. Finally, the vehicle begins to accelerate again in the final stage of cornering when the vehicle begins to return to straight-ahead driving (see the period between times $t_3$ and $t_4$ in Fig. 2, right side of Fig. 3).

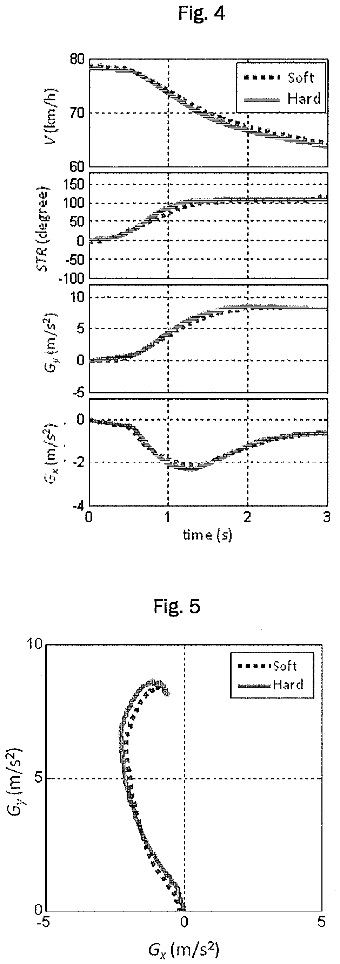

Fig. 4 exemplarily shows a relation between vehicle speed, steering wheel angle, lateral acceleration, longitudinal acceleration for soft and hard suspension modes. Here, the inventors have studied influences of suspension characteristics of the vehicle on the behavior of a vehicle controlled according to the above control concept for controlling longitudinal acceleration $G_X$ based on lateral acceleration $G_Y$ and jerk $\dot{G}_Y$ (exemplarily for a vehicle that is configured to operate in one of at least two suspension modes, a soft suspension mode and a hard suspension mode).

Damper force characteristics in the soft suspension mode are weaker (soft damper-force settings) than in hard suspension mode (hard damper-force settings) in that at least a damping force of the vehicle dampers is smaller in soft suspension mode compared to the damping force of the vehicle dampers in the hard suspension mode.

Exemplarily, Fig. 4 shows testing data the first three seconds of entering a curve in a cornering test (similar to a period between times $t_1$ and $t_2$ in the above) in which an expert driver entered the same curve with the same initial vehicle speed twice (without manual braking, deceleration or acceleration), once with the soft suspension mode being activated in the test vehicle (dashed lines) and once with the hard suspension mode being activated in the test vehicle (solid lines).

The upper drawing shows the vehicle speed V and the below drawing shows the steering angle STR as sensed by a steering wheel angle sensor of the vehicle. The two lower drawings show the behavior of the lateral acceleration $G_Y$ and the longitudinal acceleration $G_X$.

As can be seen in Fig. 4, the lateral acceleration $G_Y$ approximately follows the behavior of the steering wheel angle STR and increases as long as the steering wheel angle STR increases, until the steering wheel angle STR remains constant at approximately 100 degrees.

When the steering wheel angle STR remains constant at approximately 100 degrees, the lateral acceleration slightly decreases due to decreasing vehicle speed V. Since the longitudinal acceleration $G_X$ is controlled according to the longitudinal acceleration target control value $G_{xt\_GVC}$ as described above with reference to Figs. 1 to 3 proportional to the absolute value of the lateral jerk $G_Y$, the longitudinal acceleration $G_X$ will be negative (decelerating or braking vehicle) and the vehicle will slow down (see upper drawing of vehicle speed V).

As in Figs. 2 and 3 during the period between times $t_1$ and $t_2$, longitudinal acceleration $G_X$ will decrease from zero to a minimum value during these cornering tasks and then increase again towards zero until reaching a steady state cornering (longitudinal acceleration $G_X$ approximately zero) and/or leaving the curve again (longitudinal acceleration $G_X$ becomes positive).

Fig. 5 exemplarily shows a g-g-diagram for the lateral and longitudinal accelerations of Fig. 4. As can be seen from Figs. 4 and 5, when considering vehicle speed V, steering wheel angle STR, and longitudinal and lateral accelerations $G_X$ and $G_Y$, the differences in the controlled vehicle behavior controlled according to the concept of Figs. 1 to 3 does not seem to be significantly different, and the testing results are similar.

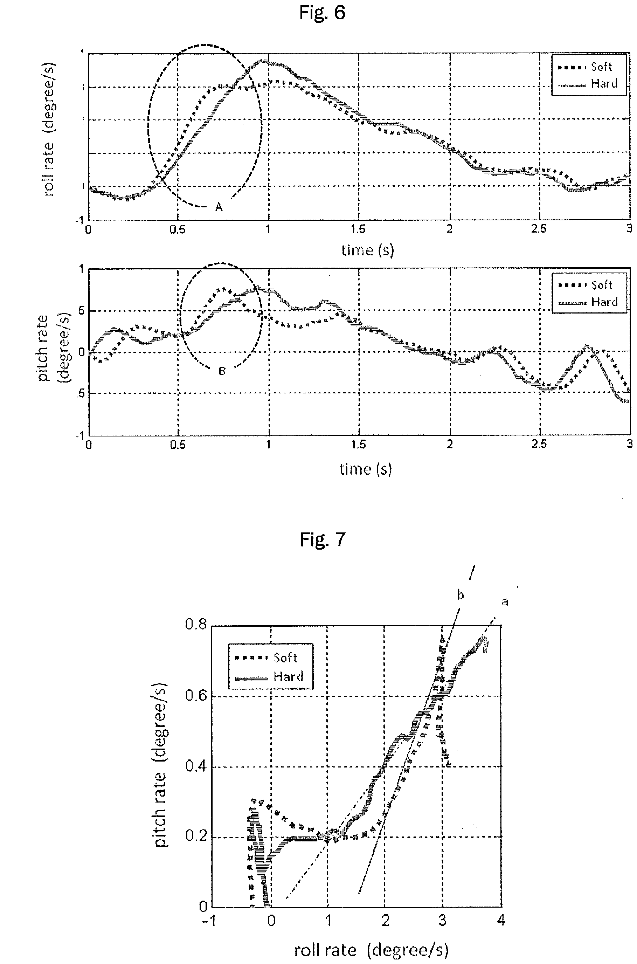

Fig. 6 exemplarily shows a relation between roll rate (upper drawing) and pitch rate (lower drawing) as function of time for soft and hard suspension modes for the above-mentioned cornering test of Figs. 4 and 5 (same first three seconds of entering the curve in the cornering test). Again, the behavior of pitch rate and roll rate are shown twice, once with the soft suspension mode being activated in the test vehicle (dashed lines) and once with the hard suspension mode being activated in the test vehicle (solid lines).

In the time period between t = 1.5 s and t = 3 s, the behavior of roll and pitch rates are very similar for the two different suspension modes. However, in an early stage, shortly after entering the curve (between t = 0.5 s and t = 1 s, see regions A and B in Fig. 6), pitch rate and roll rate of the vehicle are larger in the soft suspension mode compared to the ones in the hard suspension mode.

While Figs. 4 and 5 seem to suggest that control of the longitudinal acceleration may be performed similarly for different suspension modes and independent of suspension characteristics, inventors have found that the different behavior of roll and pitch rates as shown in Fig. 6 influences the driver's feeling and comfort during cornering (although the actual change of the longitudinal acceleration is similar) because higher roll rates and particularly higher pitch rates may feel to the driver as a more rapid and stronger undesirable braking effect when the vehicle has softer or weaker suspension characteristics or is operated in a softer suspension mode.

Fig. 7 exemplarily shows a pitch rate - roll rate diagram for pitch and roll rates of Fig. 6. Here, the pitch rate and roll rate values at a same time are plotted in a diagram in which the pitch rate is denoted on the vertical axis and the roll rate is denoted in the horizontal axis.

As can be seem in Fig. 7, the lines in the pitch rate - roll rate diagram for both suspension modes (again dashed line for soft suspension mode and solid line for hard suspension mode) can be approximated by straight lines a and b in a region or period at entry of the curve in which both of pitch and roll rate are increasing (e.g. periods of regions A and B in Fig. 6).

Here, line "a" indicates an approximate average slope of the pitch rate of the vehicle over a roll rate of the vehicle in hard suspension mode and line "b" indicates an approximate average slope of the pitch rate of the vehicle over a roll rate of the vehicle in soft suspension mode.

The average slope of the pitch rate of the vehicle over a roll rate of the vehicle in soft suspension mode is steeper than the average slope of the pitch rate of the vehicle over a roll rate of the vehicle in hard suspension mode, implying that although roll and pitch rates are higher in the areas A and B for the soft suspension mode compared to the hard suspension mode as can be expected in Fig. 6, a pitch rate of the vehicle increases stronger than a roll rate for the soft suspension mode which may negatively affect the feeling and response of the driver.

Accordingly, despite the similar behavior in Figs. 4 and 5 for different suspension characteristics, inventors propose according to the underlying idea of the invention to adapt the control parameter(s) of the control of the longitudinal acceleration in the control according to Fig. 1 depending on the suspension characteristics of the vehicle, in particular so as to reduce an average slope of the pitch rate of the vehicle over the roll rate of the vehicle for softer suspension characteristics having softer damper-force settings.

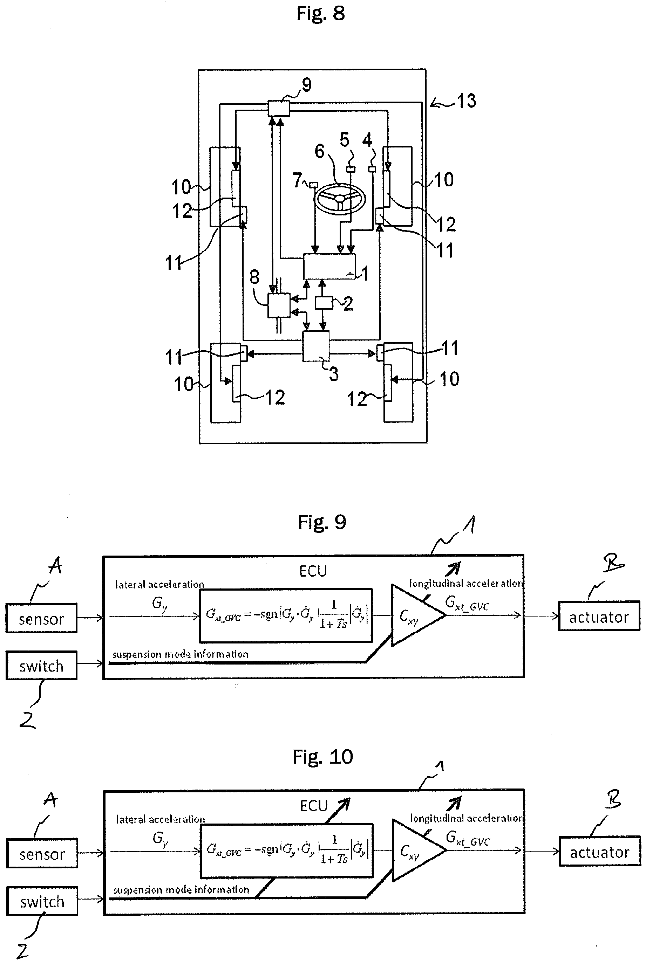

Fig. 8 exemplarily shows a schematic view of a vehicle 13 equipped with a control system according to an embodiment of the present invention. The control system exemplarily comprises the control unit 1 and sensors (which may also be integrated into the control unit 1) such as an accelerometer 4, a gyro-sensor 5, a steering wheel angle sensor 7 sensitive to a steering wheel angle STR of the steering wheel 6, and a braking control unit 9 (which may also be integrated into the control unit 1), and a brake actuator 12.

Actuators, sensors and control units in the vehicle 13 may be communicably connected via a communication bus line 8.

The vehicle 13 further comprises tires/wheels 10 having dampers 11 being controlled by a damping force control unit 3. Exemplarily, the vehicle 13 further comprises a suspension mode select switch 2 which can be operable by a user and/or even the driver (possibly even during driving) for selecting one of plural available suspension modes having different suspension characteristics including at least different damper-force settings for dampers 11.

As described above, the plural available suspension modes at least include a soft suspension mode and a hard suspension mode, damper-force settings in the hard suspension mode being stronger (higher damping force) than in the soft suspension mode. In addition, the suspension modes may further include an intermediate suspension mode or normal suspension mode (or even plural intermediate suspension modes) having intermediate damper-force settings.

The damping force control unit 3 is configured to control the damping force or damper-force settings of dampers 11 based on the suspension mode selected at switch 2.

Fig. 9 exemplarily illustrates a control of longitudinal acceleration based on lateral acceleration and jerk according to an embodiment of the present invention. Control of the longitudinal acceleration $G_X$ is performed by the control unit 1 similar to Fig. 1 based on a calculated longitudinal acceleration target control value $G_{xt\_GVC}$, however, with the difference that suspension mode information is provided to the control unit 1 based on the selected suspension mode by means of the switch 2.

Here, switch 2 may transmit the suspension mode information once when switching the suspension mode 2, and the suspension mode information may be stored in a memory unit of the control unit 1 until new updated suspension mode information is transmitted when the suspension mode is switched again by switch 2. It is to be noted that the switch 2 can also be integrated in the control unit 1.

According to the embodiment of Fig. 9, suspension mode information is used to adjust the gain factor Cxy used in the calculation of the longitudinal acceleration target control value $G_{xt\_GVC}$, wherein a gain factor Cxy is preferably adjusted such that it is decreased with decreasing damping force, i.e. regarding suspension characteristics, a smaller gain factor Cxy is used for softer suspension characteristics compared to harder suspension characteristics. For example, in case of plural suspension modes including soft and hard suspension modes, a smaller gain factor Cxy is used for soft suspension mode compared to hard suspension mode.

Fig. 10 exemplarily illustrates a control of longitudinal acceleration based on lateral acceleration and jerk according to an embodiment of the present invention. Control of the longitudinal acceleration $G_X$ is performed by the control unit 1 similar to Fig. 1 based on a calculated longitudinal acceleration target control value $G_{xt\_GVC}$, however, with the difference that suspension mode information is provided to the control unit 1 based on the selected suspension mode by means of the switch 2, similar to Fig. 9.

According to the embodiment of Fig. 10, suspension mode information is used to adjust the gain factor Cxy and the time factor T used in the calculation of the longitudinal acceleration target control value $G_{xt\_GVC}$, wherein the gain factor Cxy is preferably again adjusted such that it is decreased with decreasing damping force (i.e. regarding suspension characteristics, a smaller gain factor Cxy is used for softer suspension characteristics compared to harder suspension characteristics), and the time factor T is preferably adjusted such that it is increased with decreasing damping force (i.e. regarding suspension characteristics, a larger time factor T is used for softer suspension characteristics compared to harder suspension characteristics).

For example, in case of plural suspension modes including soft and hard suspension modes, a smaller gain factor Cxy is preferably used for soft suspension mode compared to hard suspension mode and/or a larger time factor T is preferably used for soft suspension mode compared to hard suspension mode.

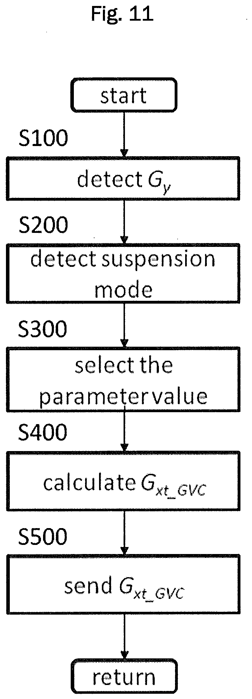

Fig. 11 exemplarily illustrates a control method according to an embodiment of the present invention performed according to one of the control units 1 of Figs. 9 and 10.

In a first step S100, control unit 1 directly or indirectly determines the lateral acceleration $G_Y$ based on sensor input. For example, the lateral acceleration $G_Y$ can be determined directly on the basis of sensor input from accelerometer 4.

In addition, or alternatively, lateral acceleration $G_Y$ can be determined indirectly by calculations leading to an estimated lateral acceleration $G_Y$ on the basis of sensor input from the steering wheel angle sensor 7 (or a tire wheel angle sensor) and the vehicle speed of the vehicle 13. Further, in addition or alternatively, the lateral acceleration $G_Y$ can be determined also on the basis of roll, pitch and/or yaw rates detected by gyro-sensor 5.

In a second step S200 (which may be performed before, after or simultaneously with S100), control unit 1 determines an activated or selected suspension mode based on suspension mode information stored in the control unit 1 or received from the switch 2. Accordingly, control unit determines a currently operating suspension mode among the plural available suspension modes of the vehicle. It is to be noted that the suspension modes may not only be manually switched via switch 2 but it is also possible that control unit 1 automatically switches between suspension modes e.g. based on vehicle speed and/or detected road conditions.

Here, available suspension modes include at least a soft and a hard suspension mode, at least the damping force of dampers 11 being stronger/larger in the hard suspension mode compared to the soft suspension mode.

Optionally, one or more intermediate suspension modes having intermediate damper-force settings may be available. In the below, one additional intermediate "normal" suspension mode is assumed in which the damping force of dampers 11 is stronger/larger compared to the soft suspension mode and weaker/smaller compared to the hard suspension mode.

In a third step S300, control parameters are adjusted/selected according to the determined suspension mode. As discussed above, this may involve at least adjusting the gain factor $C_{xy}$ and optionally additionally an adjustment of the time factor T and/or other possible control parameters. Appropriate gain and/or time factor values may be pre-determined and stored in a memory unit of the control unit 1.

For example, data indicating a look-up table may be stored in the memory unit of the control unit 1 in which pre-determined control parameters values for the gain and/or time factors are stored depending of the selected suspension mode. In case of three suspension modes "soft", "normal" and "hard" as discussed above, the memory unit of the control unit 1 may, e.g., store parameters $C_{xy\_soft}$, $C_{xy\_normal}$, and $C_{xy\_hard}$ as corresponding gain factors to be used in the respective suspension modes and/or $T_{\_soft}$, $T_{\_normal}$, and $T_{\_hard}$ as corresponding time factors to be used in the respective suspension modes.

After adjustment of control parameters depending on the suspension characteristics and in particular according to the selected suspension mode in the present embodiment, the longitudinal acceleration target control value $G_{xt\_GVC}$ is calculated (step S400) and input to an appropriate actuator such as brake actuator 12 for deceleration or by appropriately controlling a driving actuator for positive acceleration (e.g. by controlling a combustion engine of a vehicle or a motor of an electrically driven vehicle) in step S500, e.g. similar as discussed with reference to Figs. 1 and 2 above.

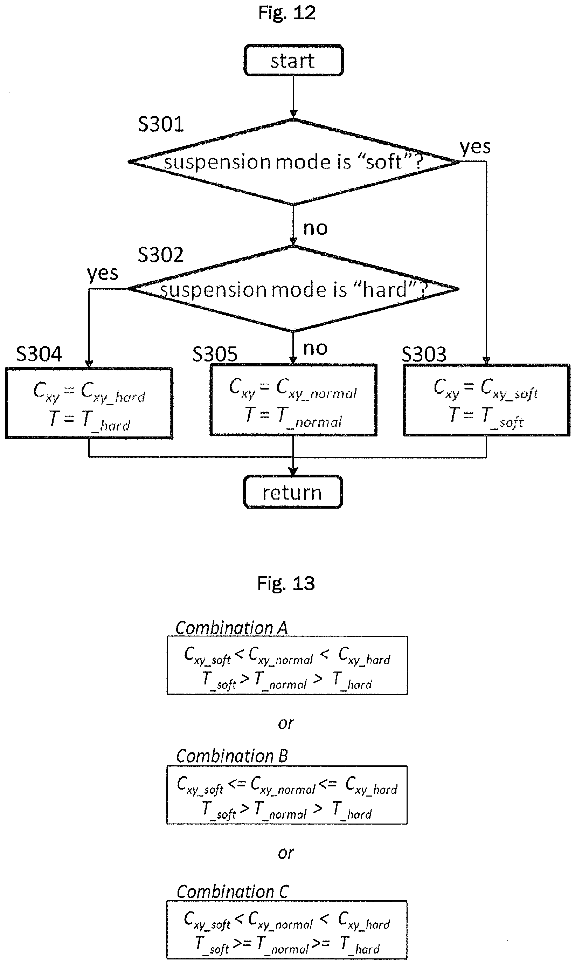

Fig. 12 exemplarily illustrates a method for adjusting control parameters according to an embodiment of the present invention, e.g. for performing steps S200 and S300 above. In step S301, if there are the three suspension modes "soft", "normal" and "hard" as discussed above and if the selected suspension mode is detected as "soft suspension mode", the method goes to step S303 and selects the stored values $C_{xy\_soft}$ for the gain factor $C_{xy}$ to be used and/or $T_{\_soft}$ for the time factor T.

In the other cases (step S301 returns No), the method goes to step S302 and, if the selected suspension mode is detected as "hard suspension mode", the method goes to step S304 and selects the stored values $C_{xy\_hard}$ for the gain factor $C_{xy}$ to be used and/or $T_{\_hard}$ for the time factor T. In the last case (step S302 returns No), the method goes to step S305 and selects the stored values $C_{xy\_normal}$ for the gain factor $C_{xy}$ to be used and/or $T_{\_normal}$ for the time factor T.

Fig. 13 exemplarily illustrates alternative control parameter combination relations. Here, according to Fig. 13, it is possible to have three advantageous parameter relationship conditions, wherein combination A is most promising.

In combination A, all parameters are different and $C_{xy\_soft} < C_{xy\_normal} < C_{xy\_hard}$ as well as $T_{\_soft} > T_{\_normal} > T_{\_hard}$. In combination B, in contrast to combination A, at least two of the gain factors $C_{xy\_soft}$ and $C_{xy\_normal}$ and $C_{xy\_hard}$ may be equal, and in combination C, in contrast to combination A, at least two of the time factors $T_{\_soft}$ and $T_{\_normal}$ and $T_{\_hard}$ may be equal.

Furthermore, depending on driver's comfort, it may be possible that driver can manually select, as user settings or user preferences, also among combinations A, B, and C by means of an input unit (e.g. via switch 2).

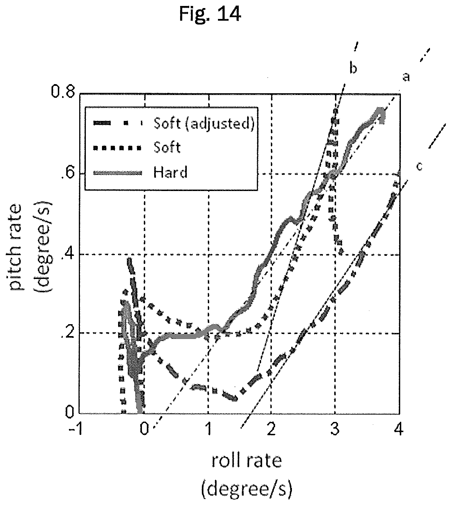

Fig. 14 exemplarily shows a relation between roll rate and pitch rate as function of time for soft and hard suspension modes under control according to an embodiment of the present invention.

The solid line (hard suspension mode) is the same of Fig. 7 and the dotted line (soft suspension mode) is the same of Fig. 7 (using $C_{xy\_hard}$ and $T_{\_hard}$ in the control similar as in the hard suspension mode), and the dashed-dotted line (soft suspension mode - adjusted) shows the relation between roll rate and pitch rate as function of time for the soft suspension mode under control according to Fig. 10 by using $C_{xy\_soft}$ and $T_{\_soft}$ in the control as adjusted control parameters (according to combination A).

Here, line "c" indicates an approximate average slope of the pitch rate of the vehicle over a roll rate of the vehicle in soft suspension mode using $C_{xy\_soft}$ and $T_{\_soft}$ in the control as adjusted control parameters (according to combination A).

As can be seen from Fig. 14, it is possible to select $C_{xy\_soft}$ and $T_{\_soft}$ and $C_{xy\_hard}$ and $T_{\_hard}$ such that the average slope of line a (hard suspension mode using $C_{xy\_hard}$ and $T_{\_hard}$) and the average slope of line c (soft suspension mode using $C_{xy\_soft}$ and $T_{\_soft}$) can be made approximately the same.

In particular, the control parameters (gain and/or time factors for soft, normal and hard suspension mode) can be selected such that the approximate average slope of the pitch rate of the vehicle over a roll rate corresponds to a target slope. Preferably, for significantly improved driving and control characteristics with optimized driver's feeling, target average slope of a pitch rate of the vehicle over a roll rate during cornering of the vehicle in a curve is preferably smaller or equal to 0.4, even more preferably smaller or equal to 0.35. In addition, the target average slope of a pitch rate of the vehicle over a roll rate during cornering of the vehicle in a curve is preferably larger or equal to 0.15.

Summarizing, according to the embodiments of the present invention present invention, by additionally taking into account the suspension characteristics and/or suspension modes of the vehicle in the control of the longitudinal acceleration and adjusting the control depending on suspension characteristics, it can be achieved to modify and develop further the control concept of EP 1 992 537 A2 for providing improved safety and higher driver's comfort and convenience, and in particular for providing improved vehicle handling and cornering behavior.

## Claims

1. Method for performing driving assistance for a vehicle, comprising

- determining a lateral acceleration ($G_Y$) of the vehicle, which is an acceleration of the vehicle in a lateral direction perpendicular to a longitudinal direction of the vehicle corresponding to a moving direction of the vehicle,
- determining a lateral jerk ($\dot{G}_Y$) of the vehicle, which is a jerk of the vehicle in the lateral direction, and
- controlling a longitudinal acceleration ($G_X$) of the vehicle on the basis of the determined lateral acceleration ($G_Y$) and lateral jerk ($\dot{G}_Y$),

**characterized in that**
controlling the longitudinal acceleration ($G_X$) of the vehicle is based on suspension characteristics of the vehicle.

2. Method according to claim 1, **characterized by**

- determining a suspension mode of the vehicle being configured to operate in one of a plurality of suspension modes,

wherein controlling the longitudinal acceleration ($G_X$) of the vehicle is based on the determined suspension mode of the vehicle.

3. Method according to claim 2, **characterized in that**
controlling the longitudinal acceleration ($G_X$) of the vehicle is based on a longitudinal acceleration target value ($G_{XT\_GVC}$) being calculated on the basis of the determined lateral acceleration ($G_Y$), the lateral jerk of the vehicle ($\dot{G}_Y$) and a parameter which is varied based on the determined suspension mode of the vehicle.

4. Method according to claim 3, **characterized in that**
the parameter is based on at least one of a gain factor ($C_{XY}$) and a time factor (T),
wherein the longitudinal acceleration target value ($G_{XT\_GVC}$) increases with increasing gain factor ($C_{XY}$) and the longitudinal acceleration target value ($G_{XT\_GVC}$) increases with decreasing time factor (T).

5. Method according to claim 4, **characterized in that**
the gain factor ($C_{XY}$) is varied based on the determined suspension mode of the vehicle.

6. Method according to claim 4 or 5, **characterized by** further comprising

- determining the gain factor ($C_{XY}$) on the basis of the determined suspension mode of the vehicle.

7. Method according to claim 5 or 6, **characterized in that**
the suspension modes of the vehicle comprise at least a soft suspension mode and a hard suspension mode, wherein a first gain factor ($C_{XY\_SOFT}$) used for soft suspension mode is smaller than a second gain factor ($C_{XY\_HARD}$) used for hard suspension mode.

8. Method according to claim 7, **characterized in that**
the suspension modes of the vehicle further comprises a normal suspension mode, wherein a third gain factor ($C_{XY\_NORMAL}$) used for normal suspension mode is smaller than or equal to the second gain factor ($C_{XY\_HARD}$) and larger than or equal to the first gain factor ($C_{XY\_SOFT}$).

9. Method according to at least one of claims 4 to 8, **characterized in that** the time factor (T) is varied based on the determined suspension mode of the vehicle.

10. Method according to at least one of claims 4 to 9, **characterized by** further comprising

- determining the time factor (T) on the basis of the determined suspension mode of the vehicle.

11. Method according to claim 9 or 10, **characterized in that**
the suspension modes of the vehicle comprise at least a soft suspension mode and a hard suspension mode, wherein a first time factor ($T_{\_SOFT}$) used for soft suspension mode is larger than a second time factor ($T_{\_HARD}$) used for hard suspension mode.

12. Method according to claim 11, **characterized in that**
the suspension modes of the vehicle further comprises a normal suspension mode, wherein a third time factor ($T_{\_NORMAL}$) used for normal suspension mode is larger than or equal to the second time factor ($T_{\_HARD}$) and smaller than or equal to the first time factor ($T_{\_SOFT}$).

13. Method according to at least one of claims 1 to 12, **characterized in that**
controlling the longitudinal acceleration ($G_X$) of the vehicle based on the determined suspension mode of the vehicle is performed on the basis of a target average slope of a pitch rate of the vehicle over a roll rate of the vehicle when cornering a target corner at a target initial speed.

14. Apparatus for performing driving assistance for a vehicle according to a method as described in at least one of claims 1 to 13, comprising

- lateral acceleration determining means for determining a lateral acceleration ($G_Y$) of the vehicle, which is an acceleration of the vehicle in a lateral direction perpendicular to a longitudinal direction of the vehicle corresponding to a moving direction of the vehicle,
- lateral jerk determining means for determining a lateral jerk ($\dot{G}_Y$) of the vehicle, which is a jerk of the vehicle in the lateral direction, and
- longitudinal acceleration control means for controlling a longitudinal acceleration ($G_X$) of the vehicle on the basis of the determined lateral acceleration ($G_Y$) and lateral jerk ($G_Y$) and on the basis of suspension characteristics of the vehicle.

**15.** Computer program product comprising computer program means for causing a vehicle control apparatus to execute the steps of a method according to at least one of claims 1 to 13.

**Patentansprüche**

**1.** Verfahren zum Ausführen einer Fahrunterstützungfür ein Fahrzeug, das Folgendes umfasst:

Bestimmen einer Querbeschleunigung ($G_Y$) des Fahrzeugs, die eine Beschleunigung des Fahrzeugs in einer seitlichen Richtung senkrecht zu einer Längsrichtung des Fahrzeugs ist, die einer Bewegungsrichtung des Fahrzeugs entspricht,
Bestimmen eines Querrucks ($\dot{G}_Y$) des Fahrzeugs, der ein Ruck des Fahrzeugs in der seitlichen Richtung ist, und Steuern einer Längsbeschieunigung ($G_X$) des Fahrzeugs auf der Grundlage der bestimmten Querbeschleunigung ($G_Y$) und des bestimmten Querrucks ($\dot{G}_Y$),
**dadurch gekennzeichnet, dass**
das Steuern der Längsbeschleunigung ($G_X$) des Fahrzeugs auf der Grundlage von Aufhängungseigenschaften des Fahrzeugs erfolgt.

**2.** Verfahren nach Anspruch 1, **gekennzeichnet durch**
das Bestimmen eines Aufhängungsmodus des zum Betreiben in einem von mehreren Aufhängungsmodi konfigurierten Fahrzeugs,
wobei das Steuern der Längsbeschleunigung ($G_X$) des Fahrzeugs auf der Grundlage des bestimmten Aufhängungsmodus des Fahrzeugs erfolgt.

**3.** Verfahren nach Anspruch 2, **dadurch gekennzeichnet, dass**
das Steuern der Längslaeschleunigung ($G_X$) des Fahrzeugs auf der Grundlage eines Längsbeschleunigungssollworts ($C_{XT\_GVC}$)erfolgt, der auf der Grundlage der bestimmten Querbeschleunigung ($G_Y$), des bestimmten Querrucks des Fahrzeugs ($\dot{G}_Y$) und eines auf der Grundlage des bestimmten Aufhängungsmodus des Fahrzeugs variierten Parameters berechnet wird.

**4.** Verfahren nach Anspruch 3, **dadurch gekennzeichnet, dass**
der Parameter auf mindestens einem Verstärkungsfaktor ($C_{XY}$) oder einem Zeitfaktor (T) basiert,
wobei der Längsbeschleunigungssollwert ($G_{XT\_GVC}$) mit steigendem Verstärkungsfaktor ($C_{XY}$) steigt und der Längsbeschleunigungssollwert ($G_{XT\_GVC}$) mit fallendem Zeitfaktor (T) steigt.

**5.** Verfahren nach Anspruch 4, **dadurch gekennzeichnet, dass**
der Verstärkungsfaktor ($C_{XY}$) auf der Grundlage des bestimmten Aufhängungsmodus des Fahrzeugs variiert wird.

**6.** Verfahren nach Anspruch 4 oder 5, **gekennzeichnet dadurch, dass** es ferner Folgendes umfasst:

Bestimmen des Verstärkungsfaktors ($C_{XY}$) auf der Grundlage des bestimmten Aufhängungsmodus des Fahrzeugs.

**7.** Verfahren nach Anspruch 5 oder 6, **dadurch gekennzeichnet, dass**
die Aufhängungsmodi des Fahrzeugs mindestens einen weichen Aufhängungsmodus und einen harten Aufhängungsmodus umfassen, wobei ein erster für den weichen Aufhängungsmodus benutzter Verstärkungsfaktor ($C_{XY\_SOFT}$) kleiner als ein zweiter für den harten Aufhängungsmodus benutzter Verstärkungsfaktor ($C_{XY\_HARD}$) ist.

**8.** Verfahren nach Anspruch 7, **dadurch gekennzeichnet, dass**

die Aufhängungsmodi des Fahrzeugs ferner einen normalen Aufhängungsmodus umfassen, wobei ein dritter für den normalen Aufhängungsmodus benutzter Verstärkungsfaktor ($C_{XY\_NORMAL}$) kleiner oder gleich dem zweiten Verstärkungsfaktor ($C_{XY\_HARD}$) und größer oder gleich dem ersten Verstärkungsfaktor ($C_{XY\_SOFT}$) ist.

**9.** Verfahren nach mindestens einem der Ansprüche 4 bis 8, **dadurch gekennzeichnet, dass** der Zeitfaktor (T) auf der Grundlage des bestimmten Aufhängungsmodus des Fahrzeugs variiert wird.

**10.** Verfahren nach mindestens einem der Ansprüche 4 bis 9, **gekennzeichnet dadurch, dass** es ferner Folgendes umfasst:

Bestimmen des Zeitfaktors (T) auf der Grundlage des bestimmten Aufhängungsmodus des Fahrzeugs.

**11.** Verfahren nach Anspruch 9 oder 10, **dadurch gekennzeichnet, dass** die Aufhängungsmodi des Fahrzeugs mindestens einen weichen Aufhängungsmodus und einen harten Aufhängungsmodus umfassen, wobei ein für den weichen Aufhängungsmodus benutzter erster Zeitfaktor ($T_{\_SOFT}$) größer als ein für den harten Aufhängungsmodus benutzter zweiter Zeitfaktor ($T_{\_HARD}$) ist.

**12.** Verfahren nach Anspruch 11, **dadurch gekennzeichnet, dass** die Aufhängungsmodi des Fahrzeugs ferner einen normalen Aufhängungsmodus umfassen, wobei ein dritter für den normalen Aufhängungsmodus benutzter Zeitfaktor ($T_{\_NORMAL}$) größer oder gleich dem zweiten Zeitfaktor ($T_{\_HARD}$) und kleiner oder gleich dem ersten Zeitfaktor ($T_{\_SOFT}$) ist.

**13.** Verfahren nach mindestens einem der Ansprüche 1 bis 12, dadurch gekennzeichnen, dass das Steuern der Längsbeschfeunigung ($G_X$) des Fahrzeugs auf der Grundlage des bestimmten Aufhängungsmodus des Fahrzeugs auf der Grundlage einer mittleren Zielsteigung einer Neigungsrate des Fahrzeugs über eine Rollrate des Fahrzeugs beim Durchfahren einer Sollkurve bei einer Sollausgangsgeschwindigkeit ausgeführt wird.

**14.** Vorrichtung zum Ausführen einer Fahrunterstützung für ein Fahrzeug nach einem in mindestens einem der Ansprüche 1 bis 13 beschriebenen Verfahren, die Folgendes umfasst:

Querbeschleunigungsbestimmungsmittel zum Bestimmen einer Querbeschleunigung ($G_Y$) des Fahrzeugs, die eine Beschleunigung des Fahrzeugs in einer seitlichen Richtung senkrecht zu einer Längsrichtung des Fahrzeugs ist, die einer Bewegungsrichtung des Fahrzeugs entspricht,
Querruckbestimmungsmittel zum Bestimmen eines Querrucks ($\dot{G}_Y$) des Fahrzeugs, der ein Ruck des Fahrzeugs in der seitlichen Richtung ist, und
Längsbeschleunigungssteuerungsmittel zum Steuern einer Längsbeschleunigung ($G_X$) des Fahrzeugs auf der Grundlage der bestimmten Querbeschleunigung ($G_Y$) und des bestimmten Querrucks ($\dot{G}_Y$) und auf der Grundlage von Aufhängungseigenschaften des Fahrzeugs.

**15.** Computerprogrammprodukt, das Computerprogrammmittel zum Veranlassen einer Fahrzeugsteuerungsvorrichtung zum AusfÜhren der Schritte eines Verfahrens nach mindestens einem der Ansprüche 1 bis 13 umfasst.

**Revendications**

**1.** Procédé pour effectuer une assistance à la conduite pour un véhicule, comprenant les étapes consistant à

- déterminer une accélération latérale ($G_\gamma$) du véhicule, qui est une accélération du véhicule dans une direction latérale perpendiculaire à une direction longitudinale du véhicule correspondant à une direction de mouvement du véhicule,
- déterminer une secousse latérale ($\dot{G}_\gamma$) du véhicule, qui est une secousse du véhicule dans la direction latérale, et
- commander une accélération longitudinale ($G_X$) du véhicule sur la base de l'accélération latérale ($G_\gamma$) et de la secousse latérale ($G_\gamma$) déterminées,

**caractérisé en ce que**
la commande de l'accélération longitudinale ($G_X$) du véhicule est basée sur des caractéristiques de suspension du véhicule.

**2.** Procédé selon la revendication 1, **caractérisé par**

    - l'étape consistant à déterminer un mode de suspension du véhicule qui est configuré pour fonctionner dans une mode parmi une pluralité de modes de suspension,

dans lequel la commande de l'accélération longitudinale ($G_X$) du véhicule est basée sur le mode de suspension déterminé du véhicule.

**3.** Procédé selon la revendication 2, **caractérisé en ce que**
la commande de l'accélération longitudinale ($G_X$) du véhicule est basée sur une valeur cible d'accélération longitudinale ($G_{XT\_GVC}$) qui est calculée sur la base de l'accélération latérale déterminée ($G_\gamma$), de la secousse latérale du véhicule ($\dot{G}_\gamma$) et d'un paramètre qui est varié sur la base du mode de suspension déterminé du véhicule.

**4.** Procédé selon la revendication 3, **caractérisé en ce que**
le paramètre est basé sur un facteur au moins parmi un facteur de gain ($C_{XY}$) et un facteur de temps ($T$),
dans lequel la valeur cible d'accélération longitudinale ($G_{XT\_GVC}$) augmente lorsque le facteur de gain ($C_{XY}$) augmente, et la valeur cible d'accélération longitudinale ($G_{XT\_GVC}$) augmente lorsque le facteur de temps ($T$) diminue.

**5.** Procédé selon la revendication 4, **caractérisé en ce que**
le facteur de gain ($C_{XY}$) est varié sur la base du mode de suspension déterminé du véhicule.

**6.** Procédé selon la revendication 4 ou 5, **caractérisé en ce qu'**il comprend en outre

    - l'étape consistant à déterminer le facteur de gain ($C_{XY}$) sur la base du mode de suspension déterminé du véhicule.

**7.** Procédé selon la revendication 5 ou 6, **caractérisé en ce que**
les modes de suspension du véhicule comprennent au moins un mode de suspension souple et un mode de suspension dur, dans lequel un premier facteur de gain ($C_{XY\_SOUPLE}$) utilisé pour le mode de suspension souple est plus petit qu'un second facteur de gain ($C_{XY\_DUR}$) utilisé pour le mode de suspension dur.

**8.** Procédé selon la revendication 7, **caractérisé en ce que**
les modes de suspension du véhicule comprennent en outre un mode de suspension normal, dans lequel un troisième facteur de gain ($C_{XY\_NORMAL}$) utilisé pour le mode de suspension anormal est plus petit que ou égal au second facteur de gain ($C_{XY\_DUR}$) et plus grand que ou égal au premier facteur de gain ($C_{XY\_SOUPLE}$).

**9.** Procédé selon l'une au moins des revendications 4 à 8, **caractérisé en ce que**
le facteur de temps ($T$) est varié sur la base du mode de suspension déterminé du véhicule.

**10.** Procédé selon l'une au moins des revendications 4 à 9, **caractérisé en ce qu'**il comprend en outre

    - l'étape consistant à déterminer le facteur de temps ($T$) sur la base du mode de suspension déterminé du véhicule.

**11.** Procédé selon la revendication 9 ou 10, **caractérisé en ce que**
les modes de suspension du véhicule comprennent au moins un mode de suspension souple et un mode de suspension dur, dans lequel un premier facteur de temps ($T_{\_SOUPLE}$) utilisé pour le mode de suspension souple est plus grand qu'un second facteur de temps ($T_{\_DUR}$) utilisé pour le mode de suspension dur.

**12.** Procédé selon la revendication 11, **caractérisé en ce que**
les modes de suspension du véhicule comprennent en outre un mode de suspension normal, dans lequel un troisième facteur de temps ($T_{\_NORMAL}$) utilisé pour le mode de suspension normal est plus grand que ou égal au second facteur de temps ($T_{\_DUR}$) et plus petit que ou égal au premier facteur de temps ($T_{\_SOUPLE}$).

**13.** Procédé selon l'une au moins des revendications 1 à 12, **caractérisé en ce que**
la commande de l'accélération longitudinale ($G_X$) du véhicule sur la base du mode de suspension déterminé du véhicule est effectuée sur la base d'une pente moyenne cible d'un taux de tangage du véhicule sur un taux de roulis du véhicule lorsqu'il prend un virage cible à une vitesse initiale cible.

**14.** Appareil pour effectuer une assistance à la conduite pour un véhicule en accord avec un procédé tel que décrit dans l'une au moins des revendications 1 à 13, comprenant

    - un moyen de détermination d'accélération latérale pour déterminer une accélération latérale ($G_\gamma$) du véhicule, qui est une accélération du véhicule dans une direction latérale perpendiculaire à une direction longitudinale du véhicule correspondant à une direction de mouvement du véhicule,
    - un moyen de détermination de secousse latérale pour déterminer une secousse latérale ($\dot{G}_\gamma$) du véhicule, qui est une secousse du véhicule dans la direction latérale, et
    - un moyen de commande d'accélération longitudinale pour commander une accélération longitudinale (Gx) du véhicule sur la base de l'accélération latérale ($G_\gamma$) et de la secousse latérale ($\dot{G}_\gamma$) déterminées, et sur la base des caractéristiques de suspension du véhicule.

**15.** Produit de programme d'ordinateur comprenant des moyens formant programme d'ordinateur pour amener un appareil de commande d'un véhicule à exécuter les étapes d'un procédé selon l'une au moins des revendications 1 à 13.

## Fig. 1

## Fig. 2

## Fig. 3

## Fig. 4

## Fig. 5

## Fig. 6

## Fig. 7

## Fig. 8

## Fig. 9

In the ECU (1):

$$G_{xt\_GVC} = -\mathrm{sgn}(G_y \cdot \dot{G}_y) \frac{1}{1+Ts}|\dot{G}_y|$$

lateral acceleration $G_y$

suspension mode information

$C_{xy}$

longitudinal acceleration $G_{xt\_GVC}$

sensor (A)  switch (2)  actuator (B)

## Fig. 10

In the ECU (1):

$$G_{xt\_GVC} = -\mathrm{sgn}(G_y \cdot \dot{G}_y) \frac{1}{1+Ts}|\dot{G}_y|$$

lateral acceleration $G_y$

suspension mode information

$C_{xy}$

longitudinal acceleration $G_{xt\_GVC}$

sensor (A)  switch (2)  actuator (B)

Fig. 11

```
                    ┌──────────┐
                    │  start   │
                    └──────────┘
                          │
  S100                    ▼
        ┌─────────────────────────────┐
        │         detect G_y          │
        └─────────────────────────────┘
                          │
  S200                    ▼
        ┌─────────────────────────────┐
        │     detect suspension       │
        │          mode               │
        └─────────────────────────────┘
                          │
  S300                    ▼
        ┌─────────────────────────────┐
        │        select the           │
        │     parameter value         │
        └─────────────────────────────┘
                          │
  S400                    ▼
        ┌─────────────────────────────┐
        │     calculate G_{xt_GVC}    │
        └─────────────────────────────┘
                          │
  S500                    ▼
        ┌─────────────────────────────┐
        │      send G_{xt_GVC}        │
        └─────────────────────────────┘
                          │
                          ▼
                    ┌──────────┐
                    │  return  │
                    └──────────┘
```

## Fig. 12

```
                          ┌─────────┐
                          │  start  │
                          └─────────┘
                               │
        S301                   ▼
              ◆ suspension mode is "soft"? ◆ ──── yes ──┐
                               │                         │
                               no                        │
        S302                   ▼                         │
        yes ── ◆ suspension mode is "hard"? ◆            │
         │                     │                         │
         │                     no                        │
   S304  ▼            S305     ▼            S303          ▼
 ┌──────────────┐  ┌──────────────┐     ┌──────────────┐
 │ Cxy = Cxy_hard│  │ Cxy = Cxy_normal│  │ Cxy = Cxy_soft│
 │ T = T_hard   │  │ T = T_normal │     │ T = T_soft   │
 └──────────────┘  └──────────────┘     └──────────────┘
         │                 │                    │
         └─────────────────┼────────────────────┘
                           ▼
                      ┌─────────┐
                      │ return  │
                      └─────────┘
```

S301 — suspension mode is "soft"?

$C_{xy} = C_{xy\_hard}$
$T = T_{\_hard}$

$C_{xy} = C_{xy\_normal}$
$T = T_{\_normal}$

$C_{xy} = C_{xy\_soft}$
$T = T_{\_soft}$

## Fig. 13

Combination A

$$C_{xy\_soft} < C_{xy\_normal} < C_{xy\_hard}$$
$$T_{\_soft} > T_{\_normal} > T_{\_hard}$$

or

Combination B

$$C_{xy\_soft} <= C_{xy\_normal} <= C_{xy\_hard}$$
$$T_{\_soft} > T_{\_normal} > T_{\_hard}$$

or

Combination C

$$C_{xy\_soft} < C_{xy\_normal} < C_{xy\_hard}$$
$$T_{\_soft} >= T_{\_normal} >= T_{\_hard}$$

## Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1992537 A2
- EP 1355209 A1
- EP 1355209 A